# FASCICULE DE BREVET EUROPEEN

(11) **EP 1 093 954 B1**
(45) Date de publication et mention de la délivrance du brevet: **08.10.2003**
(21) Numéro de dépôt: 00402838.7
(22) Date de dépôt: 13.10.2000
(51) Int. Cl.: B60K 26/00, H02G 3/32, B60R 16/02

(54) **Dispositif d'assemblage d'un calculateur électronique sur le moteur d'un véhicule automobile**
Vorrichtung zur Montage eines elektronischen Rechners auf einem Motor eines Kraftfahrzeuges
Device for mounting an electronic calculator on the motor of an automotive vehicle

(30) Priorité: 19.10.1999 FR 9913035
(43) Date de publication de la demande: 25.04.2001
(73) Titulaire: Renault V.I., 69800 St Priest (FR)
(72) Inventeur: Billon, Pierre, 69002 Lyon (FR); Moncenix, Fabrice, 69300 Caluire (FR); Hedna, Mourad, 69008 Lyon (FR); Gigleux, Christophe, 69780 Toussieu (FR); Ducrot, Jacques, 38540 Grenay (FR)
(74) Mandataire: Kohn, Philippe

(56) Documents cités:
- GB-A- 2 313 963
- US-A- 4 850 884
- PATENT ABSTRACTS OF JAPAN vol. 1998, no. 14, 31 décembre 1998 (1998-12-31) & JP 10 257631 A (SUMITOM WIRING SYST LTD), 25 septembre 1998 (1998-09-25)

## Description

L'invention concerne le mode de montage d'un calculateur électronique de véhicule automobile.

L'invention concerne plus particulièrement un ensemble selon la préambule de la revendication 1.

Un calculateur électronique qui est embarqué dans un véhicule automobile, notamment le calculateur de contrôle et de commande du moteur qui est monté sur le bloc moteur, est soumis à des vibrations importantes.

Pour atténuer ce phénomène, le calculateur est fixé sur une platine de support qui est elle-même montée sur une paroi du moteur au moyen de plots amortisseurs des vibrations.

Ainsi l'ensemble platine et calculateur est soumis à une intensité vibratoire inférieure à celle du bloc moteur.

Le faisceau électrique qui est connecté au calculateur comporte un premier point de fixation situé sur la paroi du moteur. Par conséquent le faisceau électrique n'est pas soumis à la même intensité vibratoire au niveau de son point de connexion avec le calculateur et au niveau de son premier point de fixation.

Les vibrations produites sur le faisceau posent alors des problèmes de fiabilité de la connexion électrique. Il y a un risque de détérioration de la qualité du contact électrique.

Afin de remédier à cet inconvénient, l'invention propose un ensemble du type décrit précédemment, caractérisé en ce que la platine comporte une patte sur laquelle le faisceau électrique est fixé.

Selon d'autres caractéristiques de l'invention :
- la patte fait partie de la platine ;
- la patte est une pièce rapportée qui est fixée sur la platine ;
- le faisceau électrique est fixé sur la patte au moyen d'un collier ;
- la patte comporte des trous taraudés pour le montage par vissage du collier ;
- la platine est montée sur la paroi du moteur au moyen de vis, et en ce que des tampons amortisseurs de vibrations sont interposés entre les vis et la platine ;
- la platine est traversée par du carburant, notamment du gazole, pour refroidir le calculateur électronique.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective qui représente un dispositif d'assemblage d'un calculateur électronique sur la paroi d'un moteur réalisé conformément aux enseignements de l'invention ;
- la figure 2 est une vue en coupe qui représente un plot amortisseur du dispositif d'assemblage de la figure 1.

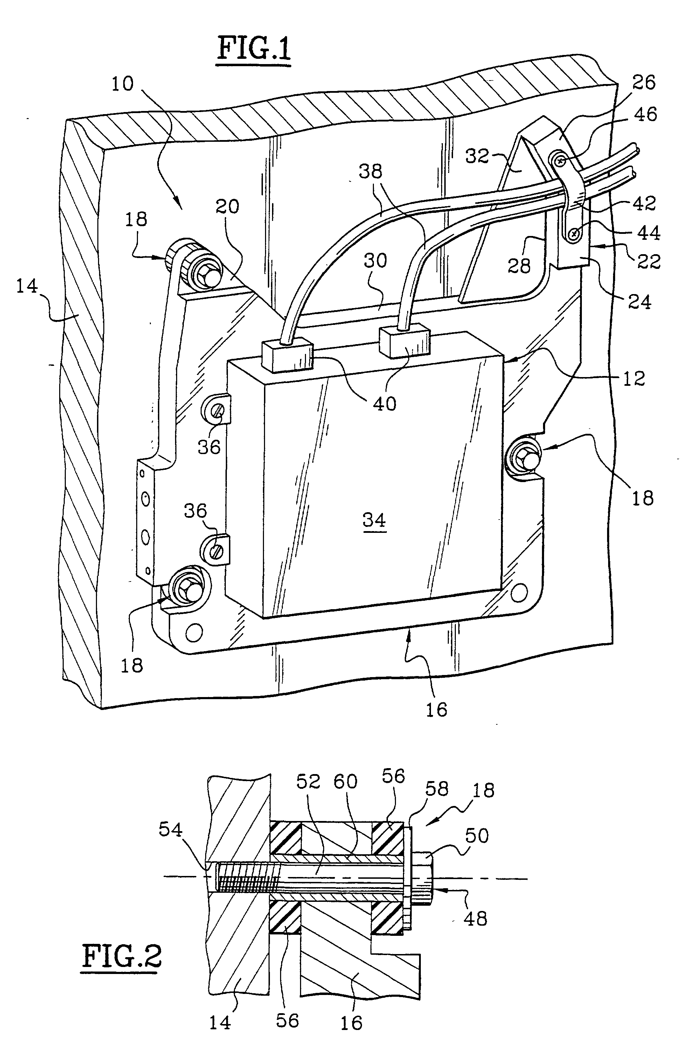

On a représenté à la figure 1, un ensemble 10 qui est monté sur la paroi 14 d'un moteur de véhicule automobile.

L'ensemble 10 comporte une platine de support 16 sur laquelle est fixé un calculateur électronique 12 et un faisceau électrique (38), l'ensemble étant monté élastiquement sur la paroi 14 du moteur au moyen de plots amortisseurs 18.

La platine de support 16 a la forme d'une plaque sensiblement rectangulaire munie à son coin supérieur gauche d'une oreille 20 et à son coin supérieur droit d'une patte 22.

La patte 22 est de section carré et s'étend sensiblement verticalement vers le haut. Elle comporte une portion inférieure 24 verticale, et une portion supérieure 26 inclinée vers la gauche.

Le bord gauche 28 de la patte 22 est relié au bord supérieur 30 de la platine 16 par une aile de rigidification 32.

De préférence la platine 16 est réalisée par moulage en intégrant à la fois l'oreille 20, la patte 22 et l'aile de rigidification 32.

Selon une variante de réalisation (non représentée) de l'invention, la patte 22 est fixée sur le coin supérieur droit de la platine 16 par tout moyen connu, par exemple par vissage ou soudage, et l'aile de rigidification 32 est fixée sur le bord supérieur 30 de la platine 16 et sur le bord gauche 28 de la patte 22 par soudage.

Le calculateur électronique 12 est représenté sous la forme d'un boîtier 34 de forme parallélépipédique rectangle.

Le boîtier 34 est monté vissé sur la face avant de la platine 16 au moyen de vis 36.

Le faisceau électrique 38 est connecté sur une face supérieure du boîtier 34 au moyen de deux connecteurs 40.

Le faisceau 38 s'étend vers la droite du dispositif 10, sensiblement horizontalement. Le faisceau 38 est fixé sur la face avant de la patte 22 au moyen d'un collier 42.

Le collier 42 est monté vissé dans des trous taraudés sur la face avant de la patte 22, au moyen d'une vis inférieure 44 et d'une vis supérieure 46.

La platine 16 est montée élastiquement sur la paroi 14 du moteur au moyen de trois plots amortisseurs 18.

Les plots amortisseurs 18 sont insérés dans des trous qui traversent l'oreille 20, le coin inférieur gauche et le milieu du côté droit de la platine 16.

Comme on peut le voir sur la figure 2, un plot amortisseur 18 comporte une vis 48 munie d'une tête 50 et d'une tige filetée 52 qui est prévue pour être vissée dans un trou taraudé 54 correspondant de la paroi 14 du moteur.

Des tampons amortisseurs 56 en forme de rondelle sont montés sur la tige 52 de la vis 48. Les tampons 56 sont réalisés par exemple dans une matière élastomère naturelle ou synthétique.

Un tampon 56 avant est interposé entre la tête 50 de la vis 48 et la face avant de la platine 16, et un tampon 56 arrière est interposé entre la paroi 14 du moteur et la face arrière de la platine 16.

Dans le mode de réalisation préféré de l'invention qui est représenté ici, la tête 50 de la vis 48 s'appuie axialement sur le tampon 56 avant par l'intermédiaire d'une rondelle d'appui 58. Une entretoise métallique 60 en forme de tube est montée sur la tige filetée 52, en appui axial avant contre la rondelle d'appui 58, et en appui axial arrière contre la paroi 14 du moteur.

Selon une variante de réalisation (non représentée) de la platine 16, la platine de support 16 comporte un circuit de refroidissement formé dans son épaisseur.

Ce circuit de refroidissement est traversé par le carburant du moteur, par exemple du gazole.

Un tel circuit de refroidissement s'avère nécessaire lorsque le calculateur 12 est susceptible d'être soumis à des températures importantes.

## Revendications

1. Ensemble comportant un calculateur électronique et une platine de support, destiné à être monté élastiquement sur une paroi d'un moteur de véhicule automobile, le calculateur électronique (12) étant fixé sur la platine (16), et un faisceau électrique (38) étant connecté au calculateur électronique (12), **caractérisé en ce que** la platine (16) comporte une patte (22) sur laquelle le faisceau électrique (38) est fixé.

2. Ensemble (10) selon la revendication précédente, **caractérisé en ce que** la patte (22) fait partie de la platine (16).

3. Dispositif (10) selon la revendication 1, **caractérisé en ce que** la patte (22) est une pièce rapportée qui est fixée sur la platine (16).

4. Ensemble (10) selon l'une quelconque des revendications précédentes, **caractérisé en ce que** le faisceau électrique (38) est fixé sur la patte (22) au moyen d'un collier (42).

5. Ensemble (10) selon la revendication précédente, **caractérisé en ce que** la patte (22) comporte des trous taraudés pour le montage par vissage du collier (42).

6. Ensemble (10) selon l'une quelconque des revendications précédentes, **caractérisé en ce que** la platine (16) est montée sur la paroi (14) du moteur au moyen de vis (48), et **en ce que** des tampons (56) amortisseurs de vibrations sont interposés entre les vis (48) et la platine (16).

7. Ensemble (10) selon l'une quelconque des revendications précédentes, **caractérisé en ce que** la platine (16) est traversée par du carburant, notamment du gazole, pour refroidir le calculateur électronique (12).

## Patentansprüche

1. Einheit mit einem elektronischen Rechner und einer Tragplatte, der federnd an einer Wand eines Motors eines Kraftfahrzeugs montiert werden soll, wobei der elektronische Rechner (12) auf der Tragplatte (16) befestigt wird, und ein Leitungsbündel (38) an den Rechner angeschlossen wird, **dadurch gekennzeichnet, dass** die Tragplatte (16) eine Befestigungsschlaufe (22) besitzt, an der das Leitungsbündel (38) befestigt wird.

2. Einheit (10) nach dem vorhergehenden Anspruch, **dadurch gekennzeichnet, dass** die Befestigungsschlaufe (22) ein Teil der Tragplatte (16) ist.

3. Einheit (10) nach Anspruch 1, **dadurch gekennzeichnet, dass** es sich bei der Befestigungsschlaufe (22) um ein aufgesetztes Teil handelt, das an der Tragplatte (16) befestigt wird.

4. Einheit (10) nach einem der vorhergehenden Ansprüche, **dadurch gekennzeichnet, dass** das Leitungsbündel (38) mittels einer Schelle (42) an der Befestigungsschlaufe (22) befestigt wird.

5. Einheit (10) nach dem vorhergehenden Anspruch, **dadurch gekennzeichnet, dass** die Befestigungsschlaufe (22) Löcher mit Innengewinde für die Montage der Schelle (42) durch Verschrauben besitzt.

6. Einheit (10) nach einem der vorhergehenden Ansprüche, **dadurch gekennzeichnet, dass** die Tragplatte (16) mittels Schrauben (48) an der Motorwand (14) montiert wird und Vibrationsdämpfer (56) zwischen den Schrauben (48) und der Tragplatte (16) eingeschoben werden.

7. Einheit (10) nach einem der vorhergehenden Ansprüche, **dadurch gekennzeichnet, dass** im Hinblick auf die Kühlung des elektronischen Rechners (12) ein Kraftstoff. insbesondere Gasöl, durch die Tragplatte (16) geführt wird.

## Claims

1. Assembly comprising an electronic computer and a support plate to be elastically mounted on a wall of an automotive vehicle engine, the electronic computer (12) being fixed on the plate (16) and an electric harness (38) being connected to the electronic computer (12), **characterised in that** the plate (16) comprises a lug (22) to which the electric harness (38) is fixed.

2. Assembly (10) according to the preceding claim, **characterised in that** the lug (22) forms part of the plate (16).

3. Assembly (10) according to claim 1, **characterised in that** the lug (22) is an attached part which is fixed to the plate (16).

4. Assembly (10) according to any of the preceding claims, **characterised in that** the electric harness (38) is fixed to the lug (22) by means of a strap (42).

5. Assembly (10) according to the preceding claim, **characterised in that** the lug (22) comprises tapped holes for the screw-mounting of the strap (42).

6. Assembly (10) according to any of the preceding claims, **characterised in that** the plate (16) is mounted on the wall (14) of the engine by means of screws (48) and **in that** vibration-damping pads (56) are interposed between the screws (48) and the plate (16).

7. Assembly (10) according to any of the preceding claims, **characterised in that** the plate (16) is traversed by fuel, in particular diesel oil, for cooling the electronic computer (12).
